# EUROPEAN PATENT SPECIFICATION

(11) **EP 1 776 870 B1**
(45) Date of publication and mention of the grant of the patent: **27.07.2011**
(21) Application number: 05023014.3
(22) Date of filing: 21.10.2005
(51) Int. Cl.: A23G 1/38

(54) **Confectionery comprising cocoa butter improver**
Süssware enthaltend Kakaobutterverbesserer
Confiserie comprenant des améliorateurs de beurre de cacao

(43) Date of publication of application: 25.04.2007
(73) Proprietor: Kraft Foods R & D, Inc., Northfield, IL 60093 (US)
(72) Inventor: Pearson, Stephen M., 85662 Hohenbrunn (DE); Karobliene, Salomeja, 52245 Kaunas (LT); Skurkiene, Jolita, 52245 Kaunas (LT); Zsigmond, Imola, 85579 Neubiberg (DE)
(74) Representative: HOFFMANN EITLE

(56) References cited:
- EP-A- 0 321 227
- GB-A- 893 337
- US-A- 3 171 748
- US-A- 4 844 940
- US-A- 5 324 533
- MAHESHWARI B, REDDY YELLA S: "Application of kokum (Garcinia indica) fat as cocoa butter improver in chocolate." JOURNAL OF THE SCIENCE OF FOOD AND AGRICULTURE, vol. 85, 2005, pages 135-140, XP002372183
- MATISSEK R: "PFLANZENFETTE IN SCHOKOLADE - RECHTLICHE UND ANALYTISCHE ASPEKTE" LEBENSMITTELCHEMIE, VCH, WEINHEIM, DE, vol. 54, no. 2, 2000, pages 25-30, XP001100078 ISSN: 0937-1478
- KRISTOTT J: "Vorteile von Kakjaobutter-Improver-Fetten in deutscher Schokolade" SÜSSWAREN, vol. 10, 2005, pages 18-19, XP009063391

## Description

The present invention concerns the use of a high proportion of CBI (cocoa butter improver) in the manufacture of confectionery products.

### Background of the Invention

In Europe, under the European Union (EU) Chocolate Directive 2000/36/EC, six vegetable fats are allowed to be used in chocolate beside cocoa butter: palm oil, illipé, shea, kokum, mango kernel and sal. The selection of these fats is based on their triacylglycerol compositions. The permitted fats must be rich in the three symmetrical mono-unsaturated triacylglycerols of the type POP, POS and SOS (O = oleic acid, P = palmitic acid, S = stearic acid). The typical content of symmetrical mono-unsaturated triacylglycerols in each of the six fats permitted for use in chocolate under EU Directive is as follows:

| Fat | Typical content (%) | | |
|---|---|---|---|
| | POP | POS | SOS |
| Palm oil | 25 | 3 | trace |
| Illipé | 9 | 29 | 42 |
| Shea | 1 | 6 | 30 |
| Kokum | trace | 5 | 74 |
| Mango kernel | 1 | 13 | 41 |
| Sal | 2 | 11 | 48 |

The similarity between the six permitted fats and cocoa butter ensures that they also have similar crystallization characteristics, which is important for the successful production of solid chocolate confectionery.

However, there are some obvious differences between individual vegetable fats. For instance, palm oil contains just a trace of the SOS triacylglycerol, but is rich in the POP triacylglycerol. The other five oils each contain a much higher content of the SOS triacylglycerol than cocoa butter, yet have a much lower POP triacylglycerol content.

For improving the suitability of the permitted fats in confectionery, in particular for the production of cocoa butter equivalent fats (CBEs), some of them are modified by fractionation to obtain fractions with an increased content of the desired triacylglycerols. This is shown in the following table which compares cocoa butter with typical triacylglycerol compositions of fractions of the six permitted fats in the form in which they are commonly employed in the production of CBEs. Under the EU Directive, these fats are considered as CBEs whether used as such or in blends.

| Fat | Typical content (%) | | |
|---|---|---|---|
| | POP | POS | SOS |
| Cocoa butter | 16 | 38 | 23 |
| Palm mid-fraction | 57 | 11 | 2 |
| Illipé butter | 9 | 29 | 42 |
| Shea stearin | 3 | 7 | 73 |
| Kokum butter | trace | 5 | 74 |
| Mango kernel stearin | 2 | 13 | 55 |
| Sal stearin | 2 | 11 | 55 |

Even though vegetable oils may be enriched with the desired or required symmetrical mono-unsaturated triacylglycerols by other modification processes such as hydrogenation and interesterification, under the EU Directive, vegetable oils that are allowed in chocolate can only be obtained by refining and/or fractionation.

Chocolate products, or confectionery, are composed of fats or fatty substances such as cocoa butter in which there are dispersed non-fat products such as cocoa components, sugars, proteins (in particular, milk proteins). Other optional components include vegetable fat, any edible substance such as fruits, nuts, etc., lecithin, aromas, and flavours. The main phase of chocolate is composed of fat bodies and its melting temperature is generally not high. For example, when this phase essentially consists of cocoa butter, it starts softening at around 28°C with concomitant loss of strength of the whole mass. The mass then no longer "breaks" in a neat manner, but rather tends to flow and sticks to the wrapping paper. In addition, after re-cooling, the mass tends to form crystallized cocoa butter ("blooming") on its surface having a white and unpleasant appearance ("like mould").

In order to allow developing confectionery formulations having a higher temperature resistance, which are less prone to stick to packaging or fingers, and which maintain the desired flavour, texture, mouthfeel and other characteristics of chocolate-like products, cocoa butter improvers (CBIS) have been used, in addition to or partly replacing cocoa butter. To date, CBI has been used only in small amounts of up to a maximum level of 5 % of chocolate mass, calculated on legal base (as defined by the EU Directive), to improve hardness of some softer qualities of cocoa butter or to improve fat bloom resistance of chocolate products. If used with cocoa butter equivalent fats, i.e. CBEs, in producing chocolate-like confectionery coatings, a maximum of 30 % of CBI has been used in CBI/CBE mixtures. Current industry practice for heat resistant compounds is the use of cocoa butter replacers (CBRs) because they do not require tempering prior to moulding or coating and are, therefore, easier to process. Yet, CBR-based confectionery has a different, more waxy mouthfeel which is less desired from a sensory aspect. Typically, the CBRs used in this application have high amounts, e.g., 40-60 %, of trans-fatty acids, which are less desired from a dietary point of view, contrary to the CBE/CBI-based confectionery which has no trans-fatty acids.

EP 0 321 227 A2 relates to shortening for a hard butter product which comprises crystallized fat, the crystallized fat comprising 1,3-saturated-2-unsaturated triglyceride, the total carbon atoms of which are not less than 50, and with a proportion of the crystals of the crystallized fat being in their stable type.

US 5,324,533 discloses a chocolate-containing composition consisting of at least the conventional chocolate ingredients and at least 25 wt.% of a fat, said composition comprising at least 0.5 wt.% of (H₂M+HM₂)-fat wherein the (H₂M+HM₂)-fat contains at least 5 wt.% of stearic acid residues, and wherein the (H₂M+HM₂)-fat displays an iodine value of less than 20, said composition having an increased resistance to bloom when tempered and moulded.

B. Maheshwari et al., J. Sci. Food Agric. 85:135-140 (2005) describes the application of kokum fat as cocoa butter improver in chocolate.

US 3,171,748 relates to a composition consisting essentially of cocoa butter and from about 10 to maximally 80% by weight of a specific shea fat fraction.

US 4,844,940 discloses a hard butter comprising a fat which is obtained from the pericarp of the Chinese tallow tree, and its use in tempered chocolates.

GB 893 337 relates to compositions for the prevention of fat bloom in chocolate, said compositions comprising a mixture of fats, which mixture contains not less than 65% of one or more disaturated-monounsaturated triglycerides in which one hydroxyl group is esterified with oleic acid and in which the other two hydroxyl groups are esterified with either palmitic or stearic acid, which triglycerides have the chemical constitution of natural vegetable fats and have a melting range of from 31 to 43°C.

R. Matissek, Lebensmittelchemie 54, 25-30 (2000) describes legal and analytical aspects of vegetable fats in chocolate.

J. Kristott, Süsswaren 10, 18-19 (2005) reports on advantages of cocoa butter improvers in German chocolate.

In view of the above, it is an object of the invention to provide confectionery products which have a high resistance to elevated temperature and, thus, are less prone to stick to packaging and fingers, while maintaining the desired flavour, texture, mouthfeel, etc.

### Summary of the Invention

It has been found by the present inventors that the use of a high ratio of cocoa butter improver (CBI) allows overcoming the deficiencies of prior art products, in particular the insufficient heat resistance, and solves the object of the invention. The present invention, therefore, provides a confectionery product comprising 25 to 40 % by weight of added vegetable fat, wherein the added vegetable fat contains cocoa butter improver (CBI) at 50 % by weight or more of added vegetable fat, the remainder being one or more of cocoa butter, cocoa butter equivalent and cocoa butter replacer, and wherein the cocoa butter improver has a solid fat content of:
86-96% at 20°C,
83-93% at 25°C,
82-92% at 30°C,
69-79% at 35°C and
5-12% at 40°C.

Moreover, the invention provides for the use of CBI in the production of confectionery products comprising CBI at a ratio of 50 % by weight or more of added vegetable fat. In particular, in accordance with the invention, a compound comprising 50 % by weight or more of CBI of added vegetable fat is used for coating or moulding confectionery products. The total amount of added vegetable fat in the confectionery product or coating for a confectionery product is in the range of 25-40%, preferably in the range of 28-35% added vegetable fat in the recipe.

### Detailed Description of the Invention

In the present invention, CBI is used at a ratio of 50 % by weight or more of added vegetable fat, up to 100 % of CBI. In certain embodiments of the invention, CBI constitutes 60 % or more, or 70 %, or 80 %, or 90 %, or 100 % of the added vegetable fat amount. In the present invention, the other part of added vegetable fat is one or more of CBE, cocoa butter and CBR. CBR is preferably used at not more than 10 % by weight of added vegetable fat, preferably not more than 6 %, or not more than 5 %, more preferably not more than 2 %. In one embodiment of the invention, no CBR is used at all. CBE and cocoa butter make up the remainder of the total vegetable fat. While CBE and cocoa butter can be used interchangeably, it is preferred to use CBE over cocoa butter owing to the higher costs of cocoa butter. In particular, CBE, or cocoa butter or a mixture of CBE and cocoa butter, can constitute up to 50 % by weight of added vegetable fat. In view of the proportion of added vegetable fat contributed by CBI, CBE (or cocoa butter or a mixture of CBE and cocoa butter) can be used at up to 40 % by weight, up to 30 % by weight, up to 20 % by weight, or up to 10 % by weight of the added vegetable fat, or is absent.

Cocoa butter equivalent (CBE) is a vegetable fat composed of symmetrical 2-oleo-disaturated triacylglycerols of C16 and C18 fatty acids. CBE is a non-hydrogenated fat produced from palm kernel fat and exotic fats by means of fractionation and serves as a direct substitute for cocoa butter. Examples of CBE that can be used either alone or admixed are: palm oil fractions, illipé butter, shea stearin, kokum butter, mango kernel stearin, and sal stearin.

Cocoa butter improver (CBI) is a harder version of CBE due to the content of triacylglycerol containing stearic-oleicstearic (SOS) acids. CBI is a non-hydrogenated fat produced from palm kernel fat and exotic fats. It is usually used in chocolate formulations having a high content of milk fat or those meant for tropical climates. It improves the heat stability of soft cocoa butter varieties, adds more solid fat and thereby increases hardness in systems having a high milk fat content.

Examples of CBI that can be used either alone or admixed are palm or shea based and can have the following solid fat content (SFC):

| Solid fat content as function of temperature | | |
|---|---|---|
| | Ex. CBI #1 | Ex. CBI#2 |
| SFC at 20°C: | 86 % | 92 % |
| SFC at 25°C: | 86 % | 91 % |
| SFC at 30°C: | 83 % | 89 % |
| SFC at 35°C: | 70 % | 75 % |
| SFC at 40°C: | 5 % | 9 % |

The range of solid fat contents of the CBI used in the present invention is as follows:

| | |
|---|---|
| SFC at 20°C: | 86-96 % |
| SFC at 25°C: | 83-93 % |
| SFC at 30°C: | 82-92 % |
| SFC at 35°C: | 69-79 % |
| SFC at 40°C: | 5-12 % |

An exemplary CBI is represented by PALMY^{®} 160 CG from Fuji Oil.

A cocoa butter replacer (CBR) is a non-tempering fat differing in composition from cocoa butter and the tempering CBE and CBI. CBR is produced by fractionation and hydrogenation of oils rich in C16 and C18 fatty acids. Coatings formulated with these fats are characterized by a somewhat waxy taste, but show very good gloss. Examples of CBR that can be used either alone or admixed have typically the following solid fat content (SFC):

| | |
|---|---|
| SFC at 20°C: | 66-78 % |
| SFC at 25°C: | 53-63 % |
| SFC at 30°C: | 31-43 % |
| SFC at 35°C: | 11-22 % |
| SFC at 40°C: | 0- 6 % |

A compound of the present invention comprising CBI at 50 % by weight or more of added vegetable fat can be used for moulding confectionery products, or it can be used for coating confectionery and other products, such as dragees, pralines, tablets, bars, confectionery centers (fondant, jelly, foamed, deposited), wafers, candied fruit, nuts, biscuit, granola type or cereal centers.

The compound can comprise, apart from the CBI component, any substances that are conventionally used in confectionery products, for example, cocoa powder, sugar, milk powder, dairy ingredients (including lactose and sweet whey powder), emulsifiers and vanillin. These substances are employed in the amounts and proportions in which they are conventionally used, for example sweetening agents (i.e. sugar, lactose, glucose monohydrate) 38-48 %, cocoa powder 10-15 %, and dairy powders (i.e. whole milk powder, skimmed milk powder, whey derivatives) 10-15 %.

The manufacturing process of a confectionery product with 50% or more CBI of the added fat, in the coating, will usually be adapted in terms of temperature ranges used for tempering the coating. Typically, the optimum temperatures for the application are higher than for regular chocolate or CBE based compound.

### Examples

A compound was produced using 90 % by weight of shea based CBI and 10 % by weight of palm and shea based CBE. The CBI had the following profile:

| | |
|---|---|
| SFC at 20°C: | 92 % |
| SFC at 25°C: | 91 % |
| SFC at 30°C: | 89 % |
| SFC at 35°C: | 75 % |
| SFC at 40°C: | 9 % |

In one trial, the following other substances were used:

| | |
|---|---|
| sweetening agents (i.e. sugar, lactose): | 42 % |
| cocoa powder: | 14 %, |
| dairy powders (i.e. skimmed milk powder, whey powder): emulsifiers, vanillin. | 8 %, |

In another trial, the following substances were used:

| | |
|---|---|
| sweetening agents (i.e. sugar, lactose): | 44 %, |
| cocoa powder: | 14 % |
| dairy powders (i.e. whole milk powder, sweet whey powder) : emulsifiers, vanillin. | 10 % |

Another compound was produced using 70 % by weight of CBI and 30 % by weight of CBE. Another compound was produced using 50 % by weight of CBI and 50 % by weight of CBE. Another compound was produced using sugar, 100 % of CBI as added vegetable fat, cocoa powder, milk powder, lactose, sweet whey powder, emulsifiers, and vanillin. (recipes according to one of the ones above)

In the trials, the temperatures used were 5-8°C higher than for a chocolate mass or for a compound coating with 30% CBI of the added vegetable fat.

When the 50 % CBI + 50 % CBE compound was used for coating on wafer sticks, the resulting product was resistant to temperatures up to 32°C for several days, without smearing or sticking to the packaging.

When the 100 % CBI compound was used for coating on wafer sticks, the resulting product was resistant to temperatures up to 35°C for several days, without smearing or sticking to the packaging.

## Claims

1. A confectionery product comprising 25 to 40 % by weight of added vegetable fat, wherein
the added vegetable fat contains 50% or more by weight of cocoa butter improver, the remainder being one or more of cocoa butter, cocoa butter equivalent and cocoa butter replacer, and
the cocoa butter improver has a solid fat content of:
86-96% at 20°C,
83-93% at 25°C,
82-92% at 30°C,
69-79% at 35°C and
5-12% at 40°C.

2. The confectionery product of claim 1, wherein cocoa butter equivalent constitutes up to 50% by weight of added vegetable fat.

3. The confectionery product of claim 1 or 2, wherein cocoa butter replacer constitutes up to 10% by weight of added fat.

4. The confectionery product of any one of the preceding claims, wherein cocoa butter improver is based on palm oil or shea.

5. The confectionery product of any one of the preceding claims which is in the form of a coating.

6. A confectionery product comprising a compound coating and a confectionery core, wherein the compound coating is a confectionery product according to any one of claims 1 to 5.

7. The confectionery product according to claim 6, wherein the confectionery core is selected from the group consisting of confectionery, dragees, pralines, tablets, bars, confectionery centers, wafers, candied fruit, nuts, biscuit, granola type and cereal centers.

8. A method for producing a confectionery product as defined in any one of claims 1 to 7, comprising the steps of
providing a compound by admixing 25 to 40 % by weight of added vegetable fat with confectionery components comprising one or more selected from cocoa powder, sugar, milk powder, dairy ingredients, emulsifiers and vanillin, and
moulding the compound or optionally coating the compound on a confectionery core, wherein
the added vegetable fat contains 50% or more by weight of cocoa butter improver, the remainder being one or more of cocoa butter, cocoa butter equivalent and cocoa butter replacer, and
the cocoa butter improver has a solid fat content of:
86-96% at 20°C,
83-93% at 25°C,
82-92% at 30°C,
69-79% at 35°C and
5-12% at 40°C.

9. Use of cocoa butter improver in the manufacture of a confectionery product, wherein
the confectionery product contains 25 to 40 % by weight of added vegetable fat,
the cocoa butter improver is used at a proportion of 50% by weight or more of added vegetable fat, the remainder of the added vegetable fat being one or more of cocoa butter, cocoa butter equivalent and cocoa butter replacer, and
the cocoa butter improver has a solid fat content of:
86-96% at 20°C,
83-93% at 25°C,
82-92% at 30°C,
69-79% at 35°C and
5-12% at 40°C.

## Patentansprüche

1. Süsswarenprodukt, umfassend 25 bis 40 Gew.% eines zugegebenen Pflanzenfettes, wobei
das zugegebene Pflanzenfett 50 Gew.% oder mehr eines Kakaobutter-Verbesserungsmittels enthält, wobei der Rest durch einen oder mehrere Vertreter aus Kakaobutter, Kakaobutteräquivalent oder Kakaobutterersatz gebildet wird, und
das Kakaobutter-Verbesserungsmittel einen Gehalt an festem Fett von:
86 bis 96 % bei 20°C,
83 bis 93 % bei 25°C,
82 bis 92 % bei 30°C,
69 bis 79 % bei 35°C und
5 bis 12 % bei 40°C
aufweist.

2. Süsswarenprodukt nach Anspruch 1, wobei das Kakaobutteräquivalent bis zu 50 Gew.% des zugegebenen Pflanzenfettes ausmacht.

3. Süsswarenprodukt nach Anspruch 1 oder 2, wobei der Kakaobutterersatz bis zu 10 Gew.% des zugegebenen Fettes ausmacht.

4. Süsswarenprodukt nach einem der vorhergehenden Ansprüche, wobei das Kakaobutter-Verbesserungsmittel auf Palmöl oder Shea basiert.

5. Süsswarenprodukt nach einem der vorhergehenden Ansprüche, welches in Form eines Überzugs vorliegt.

6. Süsswarenprodukt, umfassend einen zusammengesetzten Überzug und einen Süsswarenkern, wobei der zusammengesetzte Überzug ein Süsswarenprodukt nach einem der Ansprüche 1 bis 5 ist.

7. Süsswarenprodukt nach Anspruch 6, wobei der Süsswarenkern aus der Gruppe bestehend aus Süsswaren, Dragees, Pralinen, Tafeln, Riegeln, Süsswarenfüllungen, Waffeln, kandierten Früchten, Nüssen, Gebäck, Müslivarianten und Getreidefüllungen ausgewählt wird.

8. Verfahren zur Herstellung eines Süsswarenprodukts, wie es in einem der Ansprüche 1 bis 7 definiert ist, umfassend die Schritte:
Bereitstellung einer Zusammensetzung durch Mischen von 25 bis 40 Gew.% eines zugegebenen Pflanzenfettes mitSüsswarenkomponenten, umfassend einen oder mehrere Vertreter, ausgewählt aus Kakaopulver, Zucker, Milchpulver, Milchbestandteilen, Emulgatoren sowie Vanillin, und
Formen der Zusammensetzung oder wahlweise Überziehen der Zusammensetzung auf einen Süsswarenkern, wobei
das zugegebene Pflanzenfett 50 Gew.% oder mehr Kakaobutter-Verbesserungsmittel enthält, wobei der Rest durch einen oder mehrere Vertreter von Kakaobutter, Kakaobutteräquivalent und Kakaobutterersatz gebildet wird, und
das Kakaobutter-Verbesserungsmittel einen Gehalt an festem Fett von:
86 bis 96 % bei 20°C,
83 bis 93 % bei 25°C,
82 bis 92 % bei 30°C,
69 bis 79 % bei 35°C und
5 bis 12 % bei 40°C
aufweist.

9. Verwendung eines Kakaobutter-Verbesserungsmittels zur Herstellung eines Süsswarenprodukts, wobei
das Süsswarenprodukt 25 bis 40 Gew.% eines zugegebenen Pflanzenfettes enthält,
das Kakaobutter-Verbesserungsmittel mit einem Verhältnis von 50 Gew.% oder mehr des zugegebenen Pflanzenfettes eingesetzt wird, wobei der Rest des zugegebenen Pflanzenfettes durch einen oder mehrere Vertreter von Kakaobutter, Kakaobutteräquivalent und Kakaobutterersatz gebildet wird, und
das Kakaobutter-Verbesserungsmittel einen Gehalt an festem Fett von:
86 bis 96 % bei 20°C,
83 bis 93 % bei 25°C,
82 bis 92 % bei 30°C,
69 bis 79 % bei 35°C und
5 bis 12 % bei 40°C
aufweist.

## Revendications

1. Produit de confiserie comprenant 25 à 40 % en poids de matière grasse végétale ajoutée, dans lequel
la matière grasse végétale ajoutée contient 50 % en poids ou plus d'un agent d'amélioration du beurre de cacao, le reste étant constitué d'un ou plusieurs du beurre de cacao, d'un équivalent du beurre de cacao ou d'un produit de remplacement du beurre de cacao, et
le produit d'amélioration du beurre de cacao possède une teneur en matière grasse solide de :
86-96 % à 20°C,
83-93 % à 25°C,
82-92 % à 30°C,
69-79 % à 35°C et
5-12 % à 40°C.

2. Produit de confiserie selon la revendication 1, dans lequel l'équivalent du beurre de cacao représente jusqu'à 50 % en poids de matière grasse végétale ajoutée.

3. Produit de confiserie selon la revendication 1 ou 2, dans lequel le produit de remplacement du beurre de cacao représente jusqu'à 10 % en poids de matière grasse ajoutée.

4. Produit de confiserie selon l'une quelconque des revendications précédentes, dans lequel l'agent d'amélioration du beurre de cacao est à base d'huile de palme ou d'huile de karité.

5. Produit de confiserie selon l'une quelconque des revendications précédentes, qui est sous la forme d'un enrobage.

6. Produit de confiserie comprenant un composé d'enrobage et un coeur de confiserie, dans lequel l'enrobage composite est un produit de confiserie selon l'une quelconque des revendications 1 à 5.

7. Produit de confiserie selon la revendication 6, dans lequel le coeur de confiserie est choisi dans le groupe constitué de bonbons, de dragées, de pralines, de tablettes, de barres, de centres de confiserie, de gaufres, de fruits confits, de noix, de biscuits, et de centres de type barres de céréales et à base de céréales.

8. Procédé de production d'un produit de confiserie selon l'une quelconque des revendications 1 à 7, comprenant les étapes consistant à :
produire un composé en mélangeant 25 à 40 % en poids de matière grasse végétale ajoutée à des constituants de confiserie comprenant un ou plusieurs produits choisis parmi une poudre de cacao, du sucre, du lait en poudre, des ingrédients laitiers, des émulsionnants et de la vanilline, et
mouler le composé ou bien, facultativement, enrober un coeur de confiserie avec le produit composé, dans lequel
la matière grasse végétale ajoutée contient 50 % en poids ou plus d'un agent d'amélioration du beurre de cacao, le reste étant constitué d'un ou plusieurs produits parmi le beurre de cacao, un équivalent du beurre de cacao et un produit de remplacement du beurre de cacao, et
l'agent d'amélioration du beurre de cacao a une teneur en matière grasse solide de :
86-96 % à 20°C,
83-93 % à 25°C,
82-92 % à 30°C,
69-79 % à 35°C et
5-12 % à 40°C.

9. Utilisation d'un agent d'amélioration du beurre de cacao dans la fabrication d'un produit de confiserie, dans lequel :
le produit de confiserie contient 25 à 40 % en poids de matière grasse végétale ajoutée,
l'agent d'amélioration du beurre de cacao est utilisé selon une proportion de 50 % en poids ou plus de matière grasse végétale ajoutée, le reste de la matière grasse végétale ajoutée étant constitué d'un ou plusieurs produits parmi le beurre de cacao, un équivalent du beurre de cacao et un produit de remplacement du beurre de cacao, et
l'agent d'amélioration du beurre de cacao a une teneur en matière grasse solide de :
86-96 % à 20°C,
83-93 % à 25°C,
82-92 % à 30°C,
69-79 % à 35°C et
5-12 % à 40°C.
